# EUROPÄISCHE PATENTSCHRIFT

(11) **EP 0 555 176 B1**
(45) Veröffentlichungstag und Bekanntmachung des Hinweises auf die Patenterteilung: **19.10.1994**
(21) Anmeldenummer: 93810020.3
(22) Anmeldetag: 14.01.1993
(51) Int. Cl.: A47J 37/06, A47J 36/06

(54) **Gerät zur Herstellung von Backwaren, insbesondere Pizzas**
Apparatus for producing bakery products, particularly pizzas
Appareil pour confectionner des produits de boulangerie, en particulier des pizzas

(30) Priorität: 05.02.1992 CH 305/92; 05.02.1992 CH 306/92
(43) Veröffentlichungstag der Anmeldung: 11.08.1993
(73) Patentinhaber: ROBERT KELLER AG METALLWARENFABRIK, KUNSTSCHLOSSEREI, 8436 Rekingen (CH)
(72) Erfinder: Keller, Robert, CH-8437 Zurzach (CH)
(74) Vertreter: Bosshard, Ernst

(56) Entgegenhaltungen:
- DE-A- 2 844 930
- FR-A- 1 566 246
- FR-A- 2 425 826
- FR-A- 2 573 957

## Beschreibung

Die Erfindung bezieht sich auf ein Gerät zur Herstellung von Backwaren, insbesondere von Pizzas, mit einem Unterteil, der eine Tragscheibe für das Backgut enthält, mit einem diesen Unterteil überdeckenden, abhebbaren Oberteil und mit einer Wärmequelle für die Erwärmung des Innenraumes der Haube, wobei der Oberteil am unteren Rand mindestens drei am Umfang verteilt angeordnete, unten offene Beschikkungsöffnungen aufweist.

Aus der FR-A-2425826 ist ein runder Raclette-Ofen mit Unterteil und abhebbarem Oberteil bekannt. Der mit mehreren Beschickungsöffnungen versehene Oberteil besteht aus Blech und enthält oberhalb eines Reflektors mehrere Dampfabzugslöcher. Die Beheizung erfolgt durch einen sich im Oberteil befindlichen, ringförmigen Heizstab. Dieser Ofen ist für Raclette bestimmt, wobei die sich in Pfännchen befindlichen, in die Beschickungsöffnungen einzuschiebenden Käsestücke nur von der Oberfläche her zu schmelzen sind, um eine schmackhafte Krustenschicht zu erzeugen.

Bei der Herstellung von Backwaren wie Pizzas od.dgl., bei denen ein Teig verwendet wird, ist hingegen ein ausgewogenes Verhältnis zwischen Oberhitze und Unterhitze erforderlich, damit ein gleichmässiger Backvorgang stattfindet. Bei nicht-gewerblichen Öfen besteht beim Versuch Pizzas od.dgl. zu backen ein Problem darin, dass diese ungleichmässig gebacken werden und auf ihrer Oberseite oder Unterseite zu nass und zu wenig knusprig werden oder bei zu viel Wärme anbrennen.

Die mit der Erfindung zu lösende Aufgabe besteht darin, ein Gerät zur Herstellung von Backwaren, insbesondere zur gleichzeitigen Herstellung mehrerer Pizzas zu schaffen, das zum Aufstellen auf einem Tisch bestimmt ist und mit dem eine ausgeglichene Ober- und Unterhitze erreichbar ist und der Kochdampf sich nicht nässend auf das Backgut niederschlägt.

Gemäss der Erfindung wird diese Aufgabe dadurch gelöst, dass der Oberteil als Haube aus unglasiertem, flammfestem Steinzeug ausgebildet ist und zur Erwärmung der Unterseite der Tragscheibe ein einen vertikalen Abstand zwischen der Tragscheibe und einem sich über den Unterteil erstrekkenden Deckel bildender, gegen den Innenraum der Haube offener Zwischenraum vorhanden ist, wobei entweder die Wärmequelle in Form von Brennern im Unterteil angeordnet ist und im Deckel Durchbrüche zur Wärmeübertragung auf die Tragscheibe vorhanden sind, oder der Zwischenraum elektrisch beheizt ist.

Dadurch gelingt es eine gute Wärmeverteilung für das Backgut zu erreichen, wobei ein ausgewogenes Verhältnis zwischen Oberhitze und Unterhitze erreicht wird. Andererseits nimmt die aus unglasiertem Steinzeug, insbesondere mikroporösem gebranntem Ton bestehende Haube den Kochdampf soweit auf, dass sich auf dem Backgut keine nassen Niederschläge bilden. Es zeigt sich überdies, dass eine derartige Steinzeug-Haube eine bedeutende Geschmacksverbesserung des Backgutes bewirkt, da die Haube die Aromastoffe reflektiert.

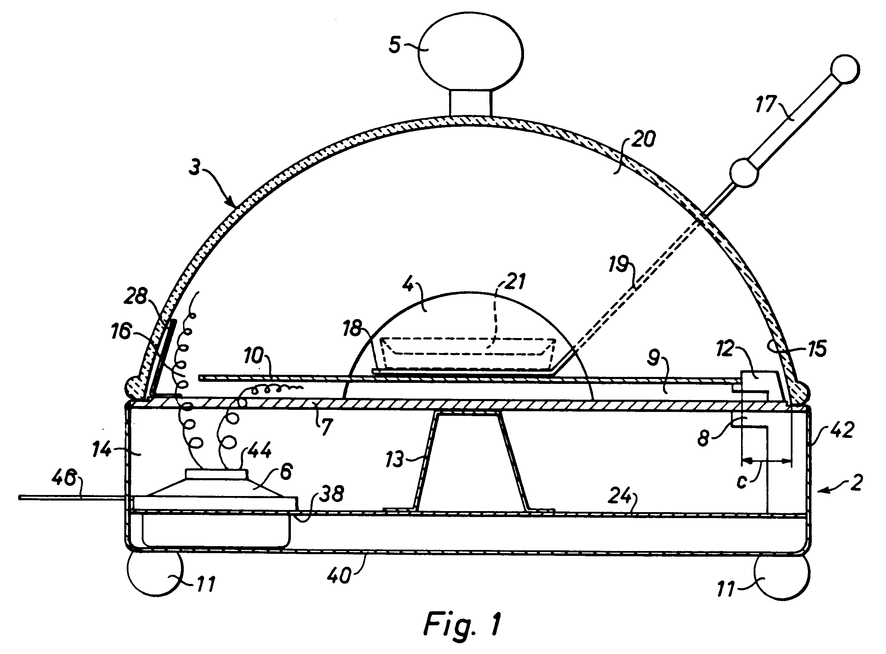

In der Zeichnung sind zwei Ausführungsbeispiele des Erfindungsgegenstandes dargestellt. Es zeigen:
- Fig. 1: einen Vertikalschnitt durch das Gerät mit Brennerbeheizung

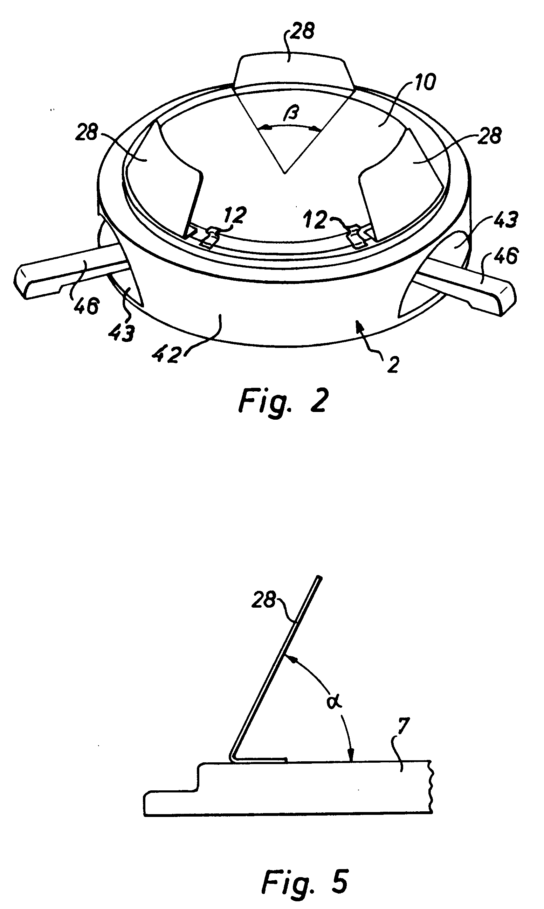

- Fig. 2: eine perspektivische Ansicht des Gerätes ohne Haube
- Fig. 3: eine Draufsicht auf eine Wärmeverteilplatte
- Fig. 4: eine Draufsicht auf einen Zwischenboden
- Fig. 5: eine Draufsicht auf ein Stützblech für die Brenner
- Fig. 6: einen Vertikalschnitt durch das Gerät mit elektrischer Beheizung
- Fig. 7: eine perspektivische Darstellung des Gerätes ohne Haube mit elektrischen Heizkörpern
- Fig. 8: eine Ansicht des Gerätes samt Haube
Das Gerät gemäss der Fig. 1 dient zur nicht-gewerblichen Herstellung von Backwaren, insbesondere Pizzas. Das Gerät wird im Haushalt normalerweise auf einem Tisch aufgestellt wobei mehrere Personen gleichzeitig Pizzas od.dgl. backen können. Dieses Tischgerät enthält einen üblicherweise aus Stahlblech bestehenden Unterteil 2 mit wärmeisolierenden Füssen 11 und einem als Haube 3 ausgebilden Oberteil. Diese domartige Haube 3 besteht aus einem keramischen Werkstoff in Form eines gesinterten, unglasierten Steinzeug, insbesondere aus gebranntem flammfestem mikroporösem Ton. Die Haube 3 ist innen glatt und kann aussen mit dekorativen Verzierungen, beispielsweise backsteinmauerartig angebrachten Rillen 32 versehen sein. Die Haube 3 ist mit mehreren Beschickungsöffnungen 4 versehen. Ueblicherweise sinds am untern Haubenrand drei am Umfang der Haube 3 verteilt angeordnete, unten offene, segmentartige Beschickungsöffnungen 4 vorhanden. Um die Beschickungsöffnungen herum ist die Wandstärke der Haube 3 vorzugsweise mit je einer wulstartigen Verdickung 30 versehen. Zum Abheben der lose aufgesetzten Haube 3 vom Unterteil 2 ist oben ein wärmeisolierender Griff oder Knauf 5 vorhanden.

Bei der Ausführungsform nach Fig. 1 befinden sich im Unterteil 2 mehrere Brenner 6. Unter Brenner wird ein Flammenbrenner mit gasförmigen, flüssigem oder pastösem Brennstoff verstanden. Bei drei Beschickungsöffnungen sind drei Brenner 6 am Umfang verteilt vorhanden, die gegenüber den Be schickungsöffnungen versetzt angeordnet sind, sodass also jeder Brenner sich zwischen zwei benachbarten Beschickungsöffnungen befindet. Die Brenner 6 liegen auf einem Zwischenboden 24 des Unterteiles 2 auf.

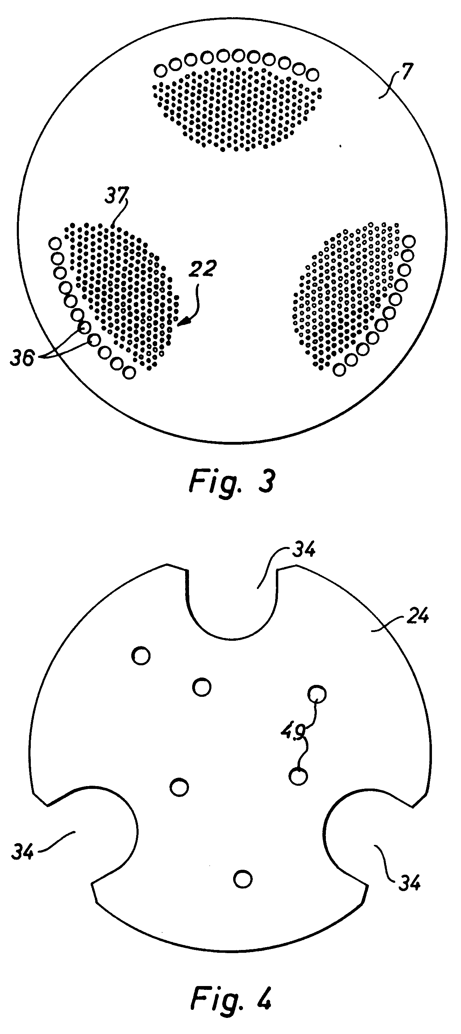

Fig. 4 zeigt eine Draufsicht auf diesen Zwischenboden 24 mit Ausnehmungen 34 für die Aufnahme der Brennergehäuse. Diese Ausnehmungen definieren die radiale Einschubstiefe der Brenner 6, da diese eine vorbestimmte Position einnehmen müssen. Die Brenner 6 liegen auf diesem Zwischenboden 24 je mit einer Schulter 38 auf und haben zum Boden 40 einen geringen Abstand.
Oberhalb der Brenner 6 befindet sich eine scheibenförmige Wärmeverteilerplatte 7, die als Deckel des Unterteiles 2 ausgebildet ist. Dieser Wärmeverteiler 7 ist im Randbereich mit Durchbrüchen 22 versehen, die segmentartig angeordnet sind. Diese Wärmeverteilerplatte 7 ist üblicherweise mit dem Unterteil über eine zentrale Stütze 13 mit dem Boden 24 fest oder wegnehmbar verbunden. Die Durchbrüche 22 können Löcher oder Schlitze sein. Vorzugsweise ist eine radial äusserste Lochreihe 36 mit grösseren Löchern gegenüber den übrigen Löchern 37 vorhanden, wie dies aus Fig. 3 hervorgeht.

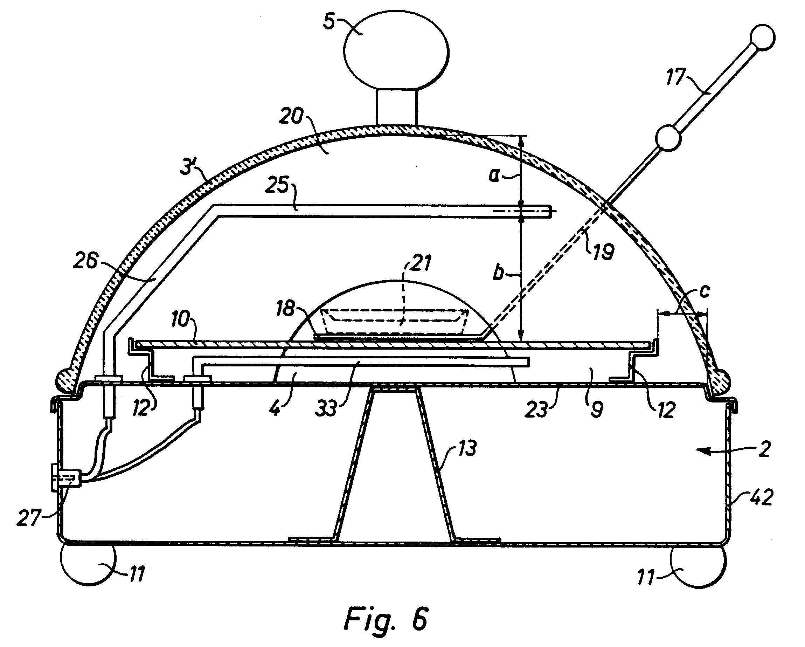

Mit der Wärmeverteilplatte 7 sind drei je im Bereich der Durchbrüche 22 am äusseren Rand angeordnete Wärmeumlenk-Schilder 28 vorhanden, die gemäss Fig. 5 zur Horizontalen einen Winkel α von etwa 64° haben.
Bei Zentrierwinkel β dieser Wärmeumlenk-Schilder 28 ist kleiner als 60°, vorzugsweise etwa 50°. Sie dienen zugleich der richtigen Positionierung der Haube 3, indem bei unrichtigem Aufsetzen der Haube 3 diese Wärmeumlenk-Schilder den Zugang zu den Beschickungsöffnungen 4 behindern würden.

In einem vertikalen Abstand von 1-2 cm oberhalb der Wärmeverteilplatte 7 befindet sich eine Tragscheibe 10 zur Abstützung der das Backgut 21 aufnehmenden Schaufeln 18. Diese Tragscheibe 10 besteht vorzugsweise aus Metall beispielsweise Aluminium. Die Tragscheibe 10 hat einen Durchmesser der kleiner ist als der der Wärmeverteilplatte 7 und liegt lose auf mehreren am Unfang verteilt angeordneten Stützen 12 auf. Somit besteht ein ringförmiger Zwischenraum 16 der Tragscheibe 10 gegenüber der Innenseite 15 des Haubenrandes von der Breite c.

Die Brenner 6 werden in Oeffnungen 14 im Mantel 42 des Unterteiles 2 unterhalb den Durchbrüchen 22 der Wärmeverteilplatte 7 auf dem Zwischenboden 24 aufliegend eingesetzt. Die Brenneröffnungen 44 befinden sich je teilweise vertikal unterhalb des Randes der Wärmeverteilplatte 7 und teilweise im Bereich des Zwischenraumes 16. Die vom Brenner 6 erzeugten Heissgase beaufschlagen die gelochte Wärmeverteilplatte 7 und bewirken eine Erwärmung des Zwischenraumes 9. Dies bewirkt, dass die Wärme auf eine relativ gross Fläche der Tragscheibe 10 verteilt wird und die Tragscheibe 10 weitgehend gleichmässig erwärmt wird, obschon sie nur von drei punktuell angeordneten Wärmequellen erhitzt wird. Ausserdem strömt ein Teil der vom Brenner 6 erhitzten Heissgase in den ringförmigen Zwischenraum 16 und von dort dem gewölbten Innenrand 15 der Haube 3 entlang in die Haubenkuppel 20. Dadurch entsteht eine optimale Verteilung zwischen Oberhitze und Unterhitze, sodass das Backgut gleichmässig gebacken wird. Im Boden 40 und im Zwischenboden 24 befinden sich Luftlöcher 49.

Das Backgut 21, beispielsweise eine vorgängig vorbereitete, relativ kleine Pizza, wird auf einer mit einem Stiel 19 und Griff 17 versehenen, vorzugsweise gelochten Schaufel 18 durch die Beschickungsöffnungen 4 in das Innere der Haube 3 eingeschoben, wobei das Backgut 21 während der Backzeit auf dieser Schaufel 18 verbleibt.

Nach Ablauf der Backzeit wird es auf dieser Schaufel aus der Beschickungsöffnung 4 herausgezogen. Die Beschickungsöffnung 4 wird vorzugsweise so gross dimensioniert, dass gleichzeitig zwei Schaufeln 18 seitlich nebeneinander Platz haben.

Es hat sich als zweckmässig erwiesen die Haube 3 mit drei Beschickungsöffnungen und mit drei Brennern 6 zu versehen.

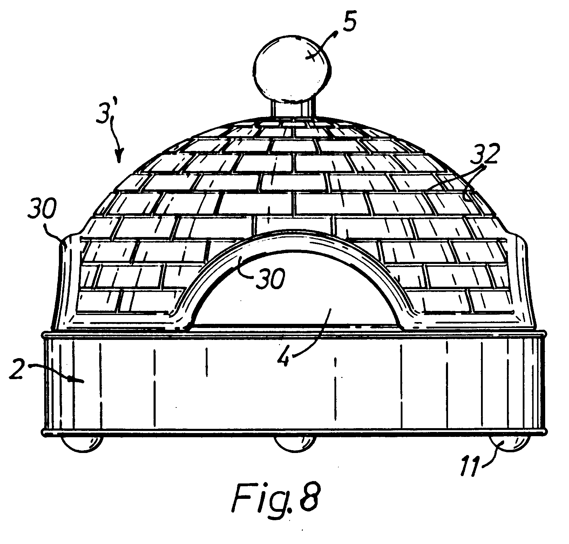

In den Fig. 6 - 8 ist eine Ausführungsform mit elektrischer Beheizung dargestellt. In diesen Figuren bedeuten gleiche Bezugszahlen gleiche Teile mit gleichen Funktionen. An Stelle der Brenner befindet sich hier oberhalb der Tragplatte 10 ein erster elektrischer Heizkörper 25.
Dieser ist ringförmig ausgebildet, wobei der Durchmesser kleiner ist als der Durchmesser der Tragscheibe 10. Ein Verbindungsstück 26 dieses Heizkörpers 25 ist mit der Deckplatte 23 des Unterteiles starr verbunden und führt zu einem Anschluss-Stecker 27 am Mantel 42 des Unterteiles 2. Der ringförmige Heizkörper 25 befindet sich in einem Bereich zwischen 1/2 und 2/3 des Abstandes zwischen Tragscheibe 10 und dem Zenit der Haube 3, vorzugsweise beträgt der Abstand a etwa 4,5 cm und der Abstand b etwa 7 cm, bei einem Durchmesser des ringförmigen elektrischen Heizkörpers 28 von 20 cm.

Bei dieser elektrischen Ausführungsform wird die Haube 3' vorzugsweise mit vier am Umfang verteilte Beschickungsöffnungen 18 versehen. Selbst wenn sich gleichzeitig vier Pizzas 21 im Innern der Haube 3' befinden, bedecken diese nicht die ganze Fläche der Tragscheibe 10. Da die Tragscheibe 10 aus einem gut wärmeleitenden Material, beispielsweise Aluminium besteht, wird die Tragscheibe 10 durch Strahlungswärme des Heizkörpers 25 von oben her aufgeheizt und ergibt dadurch Unterhitze, welche des Backgut vom Boden her erwärmt, gleichzeitig wird die Luft im Innenraum der Haube 3' vom Heizkörper 25 erwärmt, die als Oberhitze wirkt.

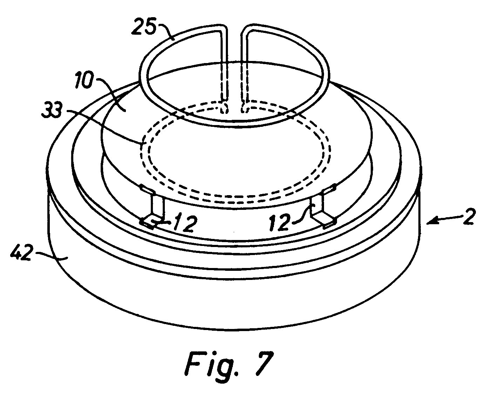

Zur Beschleunigung des Backvorganges ist es zweckmässig einen zweiten Heizkörpers 33 unterhalb der Tragplatte 10 im Zwischenraum 9 oberhalb der Deckplatte 23 anzuordnen. Dieser zweite Heizkörper 33 hat ebenfalls Ringform, wobei der Durchmesser kleiner ist als der erste Heizkörperring 25, wie dies aus Fig. 7 hervorgeht. Die Heizleistung des untern, zweiten Heizkörpers 33 ist kleiner als des ersten obern Heizkörpers 25. Wenn die Stromaufnahme des ersten Heizkörpers 25 beispielsweise 500 Watt beträgt, ist der zweite Heizkörper 33 so dimensioniert, dass er gleichzeitig etwa 300 Watt aufnimmt.

## Patentansprüche

1. Gerät zur Herstellung von Backwaren (21), insbesondere von Pizzas, mit einem Unterteil (2), der eine Tragscheibe (10) für das Backgut enthält, mit einem diesen Unterteil überdeckenden, abhebbaren Oberteil (3) und mit einer Wärmequelle (25) für die Erwärmung des Innenraumes der Haube, wobei der Oberteil (3) am unteren Rand mindestens drei am Umfang verteilt angeordnete, unten offene Beschickungsöffnungen (4) aufweist, dadurch gekennzeichnet, dass der Oberteil als Haube (3) aus unglasiertem, flammfestem Steinzeug ausgebildet ist und zur Erwärmung der Unterseite der Tragscheibe (10) ein einen vertikalen Abstand zwischen der Tragscheibe (10) und einem sich über den Unterteil (2) erstreckenden Deckel (7) bildender, gegen den Innenraum der Haube offener Zwischenraum (9) vorhanden ist, wobei entweder die Wärmequelle (6) in Form von Brennern im Unterteil (2) angeordnet ist und im Deckel (7) Durchbrüche (22) zur Wärmeübertragung auf die Tragscheibe (10) vorhanden sind, oder der Zwischenraum (9) elektrisch beheizt ist.

2. Gerät nach Anspruch 1, dadurch gekennzeichnet, dass der Deckel (7) als Wärmeverteilplatte ausgebildet ist und zwischen der Tragscheibe (10) und dem Haubeninnenrand (15) ein radialer, ringförmiger Zwischenraum (16) besteht, und als Wärmequelle mehrere Brenner (6) vorhanden sind, die im Unterteil jeweils räumlich zwischen zwei benachbarten Beschickungsöffnungen (4) und im Randbereich der Wärmeverteilplatte (7) angeordnet sind.

3. Gerät nach Anspruch 1 oder 2, dadurch gekennzeichnet, die Haube domartig ausgebildet ist mit angenähert kreisrunder Basis und die Tragscheibe (10) kreisrund ist.

4. Gerät nach einem der Ansprüche 1-3, dadurch gekennzeichnet, dass die Tragscheibe (10) aus Aluminium besteht.

5. Gerät nach einem der Ansprüche 1-4, dadurch gekennzeichnet, dass in der Haube drei Beschickungsöffnungen (4) und im Unterteil (2) drei zu den Beschickungsöffnungen (4) versetzt angeordnete Brenner (6) vorhanden sind.

6. Gerät nach einem der Ansprüche 1-5, dadurch gekennzeichnet, dass die Brenner (6) in Ausschnitten (34) eines Zwischenbodens (24) im Unterteil (2) getragen und derart angeordnet sind, dass der Rand der Tragscheibe (10) und der Zwischenraum (16) je teilweise vertikal über der Brenneröffnung (44) liegen.

7. Gerät nach einem der Ansprüche 1-6, dadurch gekennzeichnet, dass sich auf der Wärmeverteilscheibe (7) oberhalb des Brennerbereiches je ein dem Haubenrand (15) benachbartes Schutzschild (28) befindet.

8. Gerät nach einem der Ansprüche 1-4, dadurch gekennzeichnet, dass in einem vertikalen Abstand oberhalb der Tragscheibe (10) sich ein elektrischer Heizkörper (25) befindet, der auf dem Unterteil (2) abgestützt ist.

9. Gerät nach Anspruch 8, dadurch gekennzeichnet, dass sich im Zwischenraum (9) zwischen einer Deckplatte (23) des Unterteiles (2) und der Tragscheibe (10) ein weiterer elektrischer Heizkörper (33) befindet.

10. Gerät nach Anspruch 9, dadurch gekennzeichnet, dass die beiden Heizkörper (25,33) je ringförmig ausgebildet sind.

11. Gerät nach Anspruch 9 oder 10, dadurch gekennzeichnet, dass der Abstand (b) des obern Heizkörpers (25) zur Tragplatte (10) grösser ist als der Abstand (a) dieses obern Heizkörpers (25) zur Haubenkuppe.

12. Gerät nach einem der Ansprüche 1-11, dadurch gekennzeichnet, dass sich die Backwaren (21) auf in die Beschickungsöffnungen (4) einschiebbaren, tellerförmigen, mit Stielen (19) und Griffen (17) versehenen Schaufeln (18) befinden.

## Claims

1. Apparatus for producing bakery products (21), in particular pizzas, with a lower part (2), which contains a support disc (10) for the article to be baked, with an upper part (3) covering this lower part and which can be raised and with a heat source (25) for heating the interior of the hood, the upper part (3) comprising on the lower edge at least three feed openings (4) open on the lower side and distributed around the periphery, characterised in that the upper part is constructed as a hood (3) of unglazed, flame resistant stoneware and for heating the under side of the support disc (10), a gap (9) is provided, which is open with respect to the interior of the hood and forms a vertical distance between the support disc (10) and a cover (7) extending over the lower part (2), either the heat source (6) in the form of burners being located in the lower part (2) and openings (22) being provided in the cover (7) for the transmission of heat to the support disc (10), or the gap (9) is heated electrically.

2. Apparatus according to Claim 1, characterised in that the cover (7) is constructed as a heat distribution plate and a radial, annular gap (16) exists between the support disc (10) and the inner edge (15) of the hood and several burners (6) are provided as the heat source, which are located in the lower part respectively spatially between two adjacent feed openings (4) and in the edge region of the heat distribution plate (7).

3. Apparatus according to Claim 1 or 2, characterised in that the hood is constructed to be dome-shaped with an approximately circular base and the support disc (10) is circular.

4. Apparatus according to one of Claims 1 to 3, characterised in that the support disc (10) consists of aluminium.

5. Apparatus according to one of Claims 1 to 4, characterised in that provided in the hood are three feed openings (4) and in the lower part (2) three burners (6) staggered with respect to the feed openings (4).

6. Apparatus according to one of Claims 1 to 5, characterised in that the burners (6) are supported and located in cut-outs (34) of an intermediate base (24) in the lower part (2) so that the edge of the support disc (10) and the gap (16) lie respectively partially vertically above the burner opening (44).

7. Apparatus according to one of Claims 1 to 6, characterised in that located on the heat distribution disc (7) above the burner region is respectively a protective shield (28) adjacent to the edge of the hood (15).

8. Apparatus according to one of Claims 1 to 4, characterised in that located at a vertical distance above the support disc (10) is an electrical heater (25), which is supported on the lower part (2).

9. Apparatus according to Claim 8, characterised in that a further electrical heater (33) is located in the gap (9) between a cover plate (23) of the lower part (2) and the support disc (10).

10. Apparatus according to Claim 9, characterised in that the two heaters (25, 33) are constructed to be ring-shaped.

11. Apparatus according to Claim 9 or 10, characterised in that the distance (b) of the upper heater (25) from the support plate (10) is greater than the distance (a) of this upper heater (25) from the top of the hood.

12. Apparatus according to one of Claims 1 to 11, characterised in that the bakery products (21) are located on plate-like shovels (18) able to be inserted in the feed openings (4) and provided with stems (19) and handles (17).

## Revendications

1. Appareil pour confectionner des produits de boulangerie (21), en particulier des pizzas, comprenant une partie inférieure (2) pourvue d'une plaque support (10) pour les produits à cuire, une partie supérieure en forme amovible (3) recouvrant cette partie inférieure, une source de chaleur (25) pour le chauffage du volume interne du couvercle cette partie supérieure (3) présentant au moins trois ouvertures de service (4) réparties sur son bord inférieur, caractérisé en ce que la partie supérieure en forme de couvercle (3) est réalisée en une matière céramique réfractaire non émaillée, en ce qu'il existe un volume intermédiaire (9), ouvert vers l'intérieur, disposé à une distance verticale entre la plaque support (10) et une plaque (7) s'étendant au-dessus de la partie inférieure (2), tandis que la source de chaleur (6) affecte soit la forme de brûleurs disposés dans ladite partie inférieure (2), des ouvertures (22) pour la transmission de la chaleur de la plaque support (10) étant prévues dans la plaque (7), soit celle d'un chauffage électrique dudit volume intermédiaire (9).

2. Appareil selon la revendication 1, caractérisé en ce que la plaque (7) est réalisée sous la forme d'une plaque de répartition de la chaleur et en ce qu'il subsiste entre la plaque support (10) et la face interne (15) du couvercle un espace annulaire intermédiaire (16) et en ce que la source de chaleur est constituée par plusieurs brûleurs (6) qui sont disposés dans la partie inférieure respectivement entre deux ouvertures de service (4) voisines et dans la zone périphérique de la plaque de répartition de la chaleur (7).

3. Appareil selon l'une quelconque des revendications 1 ou 2, caractérisé en ce que le couvercle est réalisé sous la forme d'un dôme de base sensiblement circulaire et en ce que la plaque support (10) est circulaire.

4. Appareil selon l'une quelconque des revendications 1 à 3, caractérisé en ce que la plaque support (10) est réalisée en aluminium.

5. Appareil selon l'une quelconque des revendications 1 à 4, caractérisé en ce qu'il est prévu dans le couvercle trois ouvertures de service (4) et qu'il existe dans la partie inférieure (2) trois brûleurs (6) disposés de façon décalée par rapport auxdites ouvertures de service (4).

6. Appareil selon l'une quelconque des revendications 1 à 5, caractérisé en ce que les brûleurs (6) sont disposés dans des découpes (34) d'un fond intermédiaire (24) situé dans la partie inférieure (2) et de telle façon que le rebord de la plaque supérieure (10) et l'espace annulaire (16) soient disposés respectivement partiellement verticalement au-dessus de l'ouverture des brûleurs (44).

7. Appareil selon l'une quelconque des revendications 1 à 6, caractérisé en ce qu'il existe sur la plaque de répartition de la chaleur (7) au-dessus de la zone des brûleurs respectivement un écran de protection (28) voisin des rebords (15) du couvercle.

8. Appareil selon l'une quelconque des revendications 1 à 4, caractérisé en ce qu'au dessus de la plaque support (10) et à une certaine distance verticale de celle-ci, se trouve un élément chauffant électrique (25) qui prend appui sur la partie inférieure (2).

9. Appareil selon la revendication 8, caractérisé en ce que dans le volume intermédiaire (9) entre une plaque (23) qui recouvre la partie inférieure (2) et la plaque support (10) se trouve un autre élément chauffant électrique (33).

10. Appareil selon la revendication 9, caractérisé en ce que les deux éléments chauffants (25 et 33) ont respectivement une forme circulaire.

11. Appareil selon l'une quelconque des revendications 9 ou 10, caractérisé en ce que la distance b entre l'élément chauffant supérieur (25) et la plaque support (10) est plus grande que la distance a entre ledit élément chauffant supérieur (25) et le dôme du couvercle.

12. Appareil selon l'une quelconque des revendications 1 à 11, caractérisé en ce que les produits de boulangerie à cuire (21) sont disposés sur des pelles (18) en forme d'assiette qui sont munies d'une tige (19) et d'une poignée (17) et qui sont enfournables dans les ouvertures de service (4).
